# EUROPEAN PATENT APPLICATION

(11) **EP 1 302 264 A1**
(43) Date of publication of application: **16.04.2003**
(21) Application number: 02022368.1
(22) Date of filing: 09.10.2002
(51) Int. Cl.: B23B 27/00, B23C 5/20

(54) **Shank and cutting tool having the same**

(30) Priority: 11.10.2001 JP 2001313350
(71) Applicant: NGK Spark Plug Co., Ltd., Nagoya-shi, Aichi 467-8525 (JP)
(72) Inventor: Yamamoto, Masuo, Mizuho-ku, Nagoya-shi, Aichi 467-8525 (JP); Takeuchi, Shinya, Mizuho-ku, Nagoya-shi, Aichi 467-8525 (JP)
(74) Representative: Grünecker, Kinkeldey, Stockmair & Schwanhäusser Anwaltssozietät

(57) **Abstract**

A shank for a cutting tool comprises a cutting edge holding member and a shaft member having a tip end joined to a rear end of the cutting edge holding member. One of the rear end of the cutting edge holding member and the tip end of the shaft member has a conical protrusion, and the other has a conical recess engaged with the conical protrusion. Upon the engagement of the conical protrusion and recess, the cutting end holding member and the shaft member are easily and assuredly brought into proper coaxial alignment.

## Description

### BACKGROUND OF THE INVENTION

The present invention relates to a shank and a cutting tool having the shank.

Herein, the term "tip" refers to a cutting edge side with respect to the axial direction of a shank or cutting tool, and the term "rear" refers to a side opposite to the tip side.

Generally, a cutting tool has a rod-shaped shank and a cutting edge (such as a throw-away tip) fixed to a tip end portion of the shank, and works with a rear end portion of the shank being gripped in a tool support. The shank is made of a high-rigidity material in order to avoid cutting edge chatter and therefore increase a working accuracy of the cutting tool. However, the high-rigidity material is low in machinability. It is thus impossible to form, by cutting, a cutting edge holding means on the tip end portion of the shank. Even if possible, the formation of such a cutting edge holding means results in high manufacturing cost.

### SUMMARY OF THE INVENTION

In view of the foregoing, there is provided a shank having two separate members: one is a cutting edge holding member made of a steel material having a good machinability, and the other is a shaft member made of a high-rigidity carbide material. The cutting edge holding member and the shaft member are provided with wedge-shaped recess and protrusion, respectively, and are joined to each other by brazing upon engagement of the recess and the protrusion. (The above shank with two members may be hereinafter occasionally referred to as a "joint-type shank".)

In the engagement of the wedge-shaped recess and protrusion, however, there is a possibility that the cutting edge holding member and the shaft member become misaligned. It is necessary to provide additional means for properly bringing the cutting edge holding member and the shaft member into coaxial alignment, and then, keeping the cutting edge holding member and the shaft member in proper coaxial alignment until the completion of brazing these members. Such a difficulty in joining the cutting edge holding member and the shank member causes a cost increase in manufacturing the shank.

It is therefore an object of the present invention to provide a joint-type shank in which a cutting edge holding member and a shaft member can be easily joined to each other with no possibility of misalignment between these members, thereby attaining a low manufacturing cost of the shank as well as a high joint strength between the cutting edge holding member and the shaft member.

It is also an object of the present invention to provide a cutting tool employing such a shank.

According to an aspect of the present invention, there is provided a shank for a cutting tool, comprising: a cutting edge holding member; and a shaft member having a tip end joined to a rear end of the cutting edge holding member, one of the rear end of the cutting edge holding member and the tip end of the shaft member having a conical protrusion, and the other thereof having a conical recess engaged with the conical protrusion.

According to another aspect of the present invention, there is provided a cutting tool, comprising: a shank including a cutting edge holding member and a shaft member having a tip end joined to a rear end of the cutting edge holding member, one of the rear end of the cutting edge holding member and the tip end of the shaft member having a conical protrusion, and the other thereof having a conical recess engaged with the conical protrusion; and a throw-away tip fixed to a tip end of the cutting edge holding member.

According to still another aspect of the present invention, there is provided a shank for a cutting tool, comprising: a cutting edge holding member; and a shaft member having a tip end joined to a rear end of the cutting edge holding member, one of the rear end of the cutting edge holding member and the tip end of the shaft member having a protrusion provided with a portion circumferentially tapered down toward a protrusion end, and the other thereof having a recess engaged with the protrusion.

According to yet another aspect of the present invention, there is provided a cutting tool, comprising: a shank including a cutting edge holding member and a shaft member having a tip end joined to a rear end of the cutting edge holding member, one of the rear end of the cutting edge holding member and the tip end of the shaft member having a protrusion provided with a portion circumferentially tapered down toward a protrusion end, and the other thereof having a recess engaged with the protrusion; and a throw-away tip fixed to a tip end of the cutting edge holding member.

The other objects and features of the present invention will also become understood from the following description with reference to the accompanying drawings.

### BRIEF DESCRIPTION OF THE DRAWINGS

FIG. 1 is a side view of a cutting tool having a shank according to a first embodiment of the present invention.

FIG. 2 is a side view of the cutting tool of FIG. 1 in a condition where a cutting edge holding member and a shaft member of the shank are kept separated.

FIG. 3 is a sectional view of the cutting tool when taken along a III-III line of FIG. 1.

FIG. 4 is a sectional view showing the engagement of a cutting edge holding member and a shaft member of a shank according to a second embodiment of the present invention.

FIG. 5 is a sectional view showing the engagement of a cutting edge holding member and a shaft member of a shank according to a third embodiment of the present invention.

### DESCRIPTION OF THE EMBODIMENT

The present invention will be explained in detail by ways of preferred embodiments. In the following embodiment, like parts and portions are designated by like reference numerals and repeated descriptions thereof are omitted.

Herein, the present invention is suitably applied to a cutting tool for boring or drilling although it is applicable to any other type of cutting tool. The cutting tool for boring or drilling is used to make a hole in a workpiece. In the case of boring, the cutting tool is held stationary against the revolving workpiece. In the case of drilling, the cutting tool is revolved against the stationary workpiece. In either case, the cutting tool needs to have a smaller diameter than that of a hole to be formed. However, a shank having a smaller diameter tend to cause tool chatter. According to the present invention, it is possible to provide great effects on a shank of smaller diameter to be suitable for use in the cutting tool for boring and drilling, as described below.

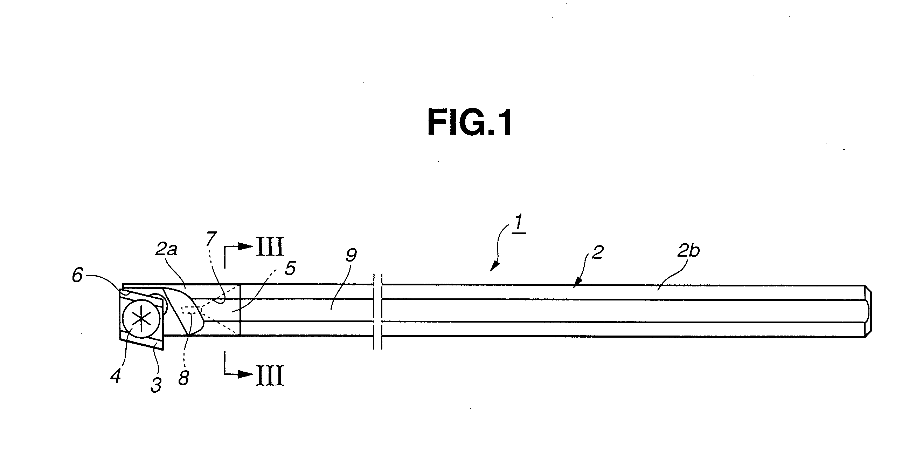

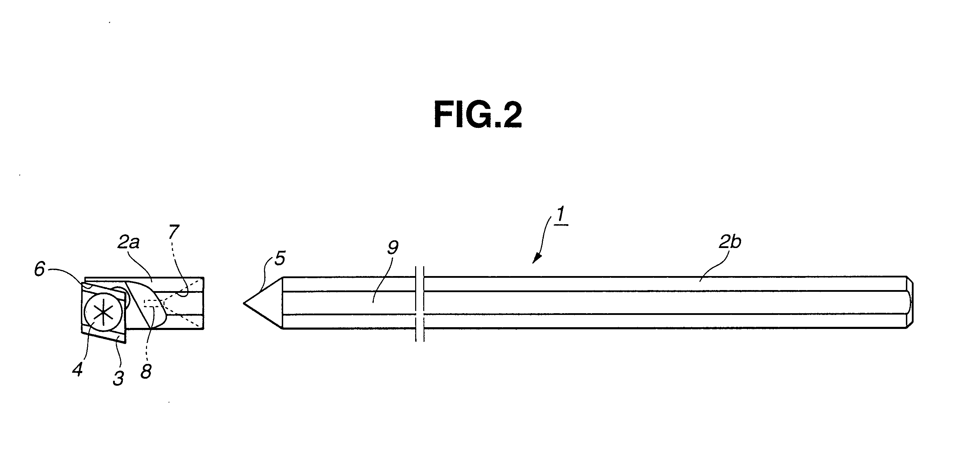

Firstly, a first embodiment according to the present invention will be described with reference to FIGS. 1 to 3.

In the first embodiment, a cutting tool 1 is designed for boring as a so-called "boring bar". The cutting tool 1 comprises a shank 2 having a cutting edge holding member 2a and a shaft member 2b, and a throw-away tip 3. In the first embodiment, the shank 2 is 4.0 mm in diameter. The throw-away tip 3 is fixed to a tip end of the cutting edge holding member 2a with the use of a screw 4. The shaft member 2b is coaxially joined at a tip end thereof to a rear end of the cutting edge holding member 2a.

The shaft member 2b is made of a high-rigidity carbide material such as tungsten carbide (WC), and has a conical protrusion 5 formed on the tip end thereof. In the first embodiment, the protrusion 5 is shaped into a circular cone with a vertex angle of 60 degrees. Further, the shaft member 2b except for the protrusion 5 has a length approximately ten times longer than the total length of the cutting edge holding member 2a, although the shaft member 2b is partly omitted from the drawings.

The cutting edge holding member 2a is made of a steel material having a relatively good machinability (such as SCM435 alloy steel). Preferably, the cutting edge holding member 2a is made of a material having a better machinability than that of the carbide material of the shaft member 2b. The cutting edge holding member 2a has a seat portion 6 on which the throw-away tip 3 is seated and a circular conical recess 7 formed in the rear end thereof to be engageable with the protrusion 5 of the shaft member 2b. Further, a hole 8 is formed in a narrowed bottom portion of the conical recess 7. The hole 8 is circular in cross section in the first embodiment.

It is alternatively possible that the cutting edge holding member 2a is provided with the protrusion 5 whereas the shaft member 2b is provided with the recess 7 and the hole 8. However, the shank 2 can be manufactured more easily by forming the easier-to-form protrusion 5 on the shaft member 2 made of relatively hard-to-machine carbide material and forming the harder-to-form recess 7 in the cutting edge holding member 2a made of relatively easy-to-machine steel material.

The cutting edge holding member 2a and the shaft member 2b are joined to each other by means of brazing upon engagement of the protrusion 5 and the recess 7. In the brazing, a foil of brazing material (such as a silver brazing alloy) is interposed between the cutting edge holding member 2a and shaft member 2b and melted with heat. An excessive amount of the melted brazing material gets into the hole 8 so that the brazing material does not spill over an outer surface of the shank 2. Alternatively, the cutting edge holding member 2a and the shaft member 2b are joined to each other by means of an adhesive. The adhesive may be made of methacrylic synthetic resin. In this case, an excessive amount of the adhesive also gets into the hole 8 so that the adhesive does not spill over. In the engagement of the protrusion 5 and the recess 7, an end of the protrusion 5 can be prevented from interfering with the bottom portion of the recess 7 by virtue of the hole 8 so as not to cause a faulty joint between the cutting edge holding member 2a and the shaft member 2b.

After joining the cutting edge holding member 2a and the shaft member 2b to each other, the shank 2 is subjected to cutting so that hold-down planes 9 are formed on the outer surface of the shank 2.

As described above, with the cutting edge holding member 2a and the shaft member 2b being made of the material having a better machinability and the high-rigidity carbide material, respectively, it is possible to attain two effects of improving a working accuracy of the cutting tool 1 and reducing a manufacturing cost of the shank 2.

Further, the cutting edge holding member 2a and the shaft member 2b are automatically held in proper coaxial alignment with each other upon engagement of the protrusion 5 and the recess 7. That is, the cutting edge holding member 2a and the shaft member 2b can be easily joined to each other with a high degree of positioning accuracy.

When the protrusion 5 and the recess 7 have the same vertex angle as that of the wedge-shaped protrusion and recess of a conventional shank, the surface area of the protrusion 5 and the recess 7 are mathematically the same as that of the wedge-shaped protrusion and recess. (It is assumed that the shank 2 has the same diameter at the joint between the cutting edge holding member 2a and the shaft member 2b as that of the conventional shank.) In other words, the shank 2 can secure the same joint surface between the cutting edge holding member 2a and the shank member 2b as that of the conventional shank. However, the engagement of the conical protrusion 5 and the conical recess 7 is more stable and well-balanced in any direction. Thus, the shank 2 can attain a higher joint strength between the cutting edge holding member 2a and the shaft member 2b even when the joint surface thereof is the same as that of the above conventional shank.

The conical protrusion 5 and the recess 7 can be formed with a low degree of difficulty, thereby allowing the shank 2 to be made smaller in diameter at the joint between the cutting edge holding member 2a and the shaft member 2b. More specifically, the diameter of the joint between the rear end of the cutting edge holding member 2a and of the tip end of the shaft member 2b can be reduced to 5.0 mm or less (e.g. 4 mm as in the first embodiment).

The vertex angle of the conical protrusion 5 and the conical recess 7 is preferably adjusted so as to be in a range from 60 to 120 degrees. When the vertex angle is in the above-specified range, the recess 7 becomes easy to form. Further, the protrusion 5 and the recess 7 can attain practical strength, without any possibility that the end of the protrusion 5 may be bent or damaged.

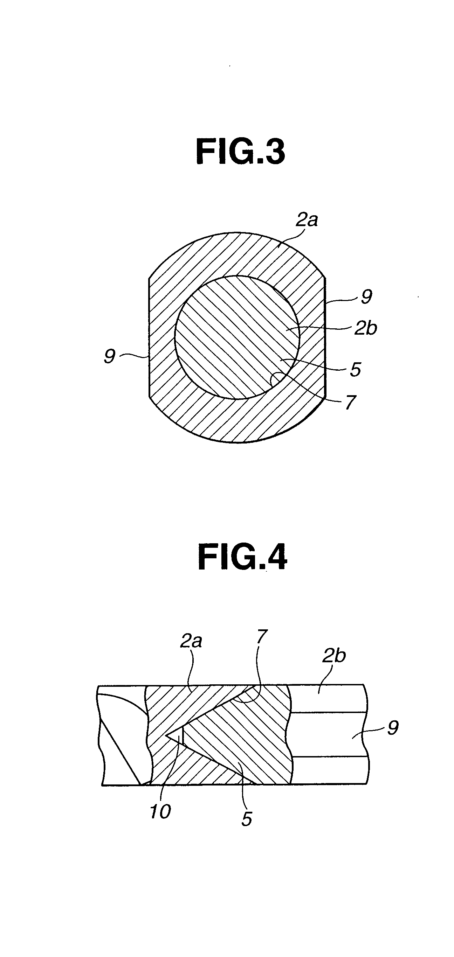

Next, a second embodiment according to the invention will be described with reference to FIG. 4. In the second embodiment, the protrusion 5 of the shaft member 2b is shaped into a frustum of circular cone so that the protrusion 5 has a flat face at its end. There is thus provided a space 10 between the flat end face of the protrusion 5 and the bottom portion of the recess 7. When the cutting edge holding member 2a and the shaft member 2b are joined to each other by means of brazing or an adhesive, an excessive amount of the brazing material or adhesive gets into the space 10 so that any brazing material or adhesive does not spill over the outer surface of the shank 2. Preferably, the flat end face of the protrusion 5 is 0.3 mm or more in diameter in order to avoid a faulty joint between the cutting edge holding member 2a and the shaft member 2b that can result from the interference of the end of the protrusion 5 with the bottom portion of the recess 7. For example, the flat end face of the protrusion 5 is 0.5 mm in diameter in the second embodiment. The hole 8 may be provided in addition to the space 10.

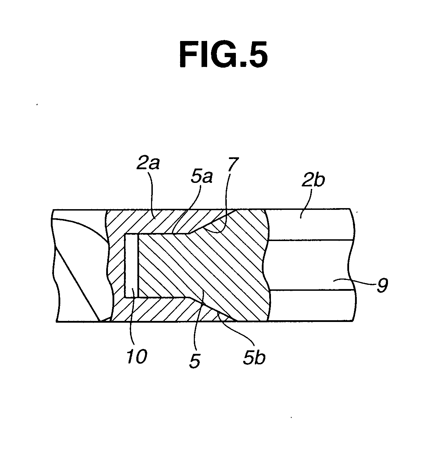

A third embodiment according to the present invention will be described with reference to FIG. 5. In the third embodiment, the protrusion 5 has a cylindrical end portion 5a and a conically tapered portion 5b integrally formed with the cylindrical end portion 5a, although the protrusion 5 of the first and second embodiments are tapered throughout its length. The portion 5b is circular in cross section. The recess 7 is shaped corresponding to the protrusion 5. With the portion 5b conically tapered down to the cylindrical end portion 5a, it is possible to produce a good centering effect so that the cutting edge holding portion 2a and the shaft member 2b can be easily and assuredly held in proper coaxial alignment.

In the above embodiments, the protrusion 5 is preferably conical in shape so as to be formed easily at low cost and, at the same time, produce a good centering effect for proper positioning of the cutting edge holding member 2a and the shaft member 2b. However, it is alternatively possible that the protrusion 5 (or the portion 5b of the protrusion 5) is circumferentially tapered down toward its end in a different manner with a cross-sectional area thereof gradually decreasing, whereas the recess 7 is shaped corresponding to the protrusion 5. More specifically, the protrusion 5 may be pyramidally tapered (i.e. shaped into a pyramid or a frustum of pyramid) or spherically tapered. This makes it also possible not only to attain a higher joint strength between the cutting edge holding member 2a and the shaft member 2b but also to easily bring the cutting edge holding member 2a and the shaft member 2b into proper coaxial alignment.

The entire contents of Japanese Patent Application No. 2001-313350 (filed on October 11, 2001) are herein incorporated by reference.

Although the present invention has been described with reference to specific embodiments of the invention, the invention is not limited to the above-described embodiments. Various modification and variation of the embodiments described above will occur to those skilled in the art in light of the above teaching. For example, the cutting tool 1 may have another means of cutting e.g. a cutting edge formed directly on the cutting edge holding member 2a, in place of the throw-away tip 3. The scope of the invention is defined with reference to the following claims.

## Claims

1. A shank (2) for a cutting tool (1), comprising:
a cutting edge holding member (2a); and
a shaft member (2b) having a tip end joined to a rear end of the cutting edge holding member (2a),
one of the rear end of the cutting edge holding member (2a) and the tip end of the shaft member (2b) having a conical protrusion (5), and the other thereof having a conical recess (7) engaged with the conical protrusion (5).

2. A shank (2) according to Claim 1, wherein the shaft member (2b) is made of a carbide material having a high rigidity, and the cutting edge holding member (2a) is made of a metal having a better machinability than that of the carbide material.

3. A shank (2) according to Claim 1 or 2, wherein the conical protrusion (5) is formed on the tip end of the shaft member (2b), and the conical recess (7) is formed in the rear end of the cutting edge holding member (2a).

4. A shank (2) according to any one of Claims 1 to 3, wherein the cutting edge holding member (2a) and the shaft member (2b) are joined to each other by means of either one of brazing and an adhesive.

5. A shank (2) according to any one of Claims 1 to 4, wherein a hole (8) is formed in a bottom portion of the recess (7).

6. A shank (2) according to any one of Claims 1 to 5, wherein the protrusion (5) is shaped into a frustum of cone so that there is a space (10) between a flat end face of the protrusion (5) and a bottom portion of the recess (7).

7. A shank (2) according to Claim 6, wherein the flat end face of the protrusion (7) is 0.3 mm or greater in diameter.

8. A shank (2) according to any one of Claims 1 to 7, wherein the shank (2) is 5.0 mm or smaller in diameter at a joint between the rear end of the cutting edge holding member (2a) and the tip end of the shaft member (2b).

9. A shank (2) according to any one of Claims 1 to 7, wherein the conical protrusion (5) and the conical recess (7) have a vertex angel of 60 to 120 degrees.

10. A shank (2) according to any one of Claims 1 to 9, wherein the cutting tool (1) is designed for boring or drilling.

11. A cutting tool (1), comprising:
a shank (2) according to any one of Claims 1 to 10; and
a throw-away tip (3) fixed to a tip end of the cutting edge holding member (2a).

12. A shank (2) for a cutting tool (1), comprising:
a cutting edge holding member (2a); and
a shaft member (2b) having a tip end joined to a rear end of the cutting edge holding member (2b),
one of the rear end of the cutting edge holding member (2a) and the tip end of the shaft member (2b) having a protrusion (5) provided with a portion (5b) circumferentially tapered down toward a protrusion end, and the other thereof having a recess (7) engaged with the protrusion (5).

13. A shank (2) according to Claim 12, wherein the cutting edge holding member (2a) is made of a material having a better machinability than that of the shaft member (2b).

14. A shank (2) according to Claim 13, wherein the shaft member (2b) is made of a carbide material.

15. A shank (2) according to any one of Claims 12 to 14, wherein the protrusion (5) is formed on the tip end of the shaft member (2b), and the recess (7) is formed in the rear end of the cutting edge holding member (2a).

16. A shank (2) according to any one of Claim 12 to 15, wherein the tapered portion (5b) is circular in cross section.

17. A shank (2) according to any one of Claims 12 to 16, wherein the protrusion (5) has a flat end face of 0.3 mm or greater in diameter.

18. A shank (2) according to Claim 17, wherein there is a space (10) between the flat end face of the protrusion (5) and a bottom portion of the recess (7).

19. A shank (2) according to according to any one of Claims 12 to 18, wherein a hole (8) is formed in a bottom portion of the recess (7).

20. A cutting tool (1), comprising:
a shank (2) according to any one of Claims 12 to 19; and
a throw-away tip (3) fixed to a tip end of the cutting edge holding member (2a).
